# EUROPÄISCHE PATENTANMELDUNG

(11) **EP 1 767 304 A1**
(43) Veröffentlichungstag der Anmeldung: **28.03.2007**
(21) Anmeldenummer: 06018574.1
(22) Anmeldetag: 05.09.2006
(51) Int. Cl.: B23K 1/008, H05K 3/34, B23K 1/08, B23K 3/06, B23K 3/08, F27B 9/04

(54) **Schutzgas-Lötmaschine und Lötverfahren mit Schutzgas mit Höhendifferenz zwischen der Eintrittsöffnung bzw. der Austrittöffnung und einem inneren Bereich des Lötmaschinekanals**

(30) Priorität: 27.09.2005 DE 102005046199
(71) Anmelder: Linde AG, 65189 Wiesbaden (DE)
(72) Erfinder: Wandke, Ernst, 82538 Geretsried (DE)

(57) **Zusammenfassung**

Die Erfindung betrifft eine Lötmaschine (1) und ein entsprechendes Lötverfahren, bei denen der Schutzgasverbrauch reduziert wird durch Höhendifferenzen (17) zwischen der Eintrittsöffnung (20) bzw. der Austrittsöffnung (21) und einem inneren Bereich des Lötmaschinenkanals (5).

## Beschreibung

Die vorliegende Erfindung betrifft eine Lötmaschine und ein Lötverfahren, bei denen Schutzgas eingesetzt wird.

Lötmaschinen sind in verschiedener Weise im Stand der Technik dokumentiert und im praktischen Einsatz. Von größerer industrieller Bedeutung sind insbesondere Wellenlötmaschinen, Reflowlötmaschinen und auch Selektivlötmaschinen. Grundsätzlich wird beim Löten eine Verbindung fester Körper, insbesondere eine elektrische Kontaktierung, über Vermittlung eines dritten vorübergehend in den schmelzflüssigen Zustand gebrachten Körpers bewerkstelligt. Die Erfindung betrifft dabei sowohl das Weichlöten mit Temperaturen bis zu etwa 450 °C als auch das Hartlöten mit Temperaturen über 450 °C. Besondere Bedeutung hat sie für Weichlötverfahren und - maschinen im Bereich der Elektronikfertigung.

Es ist an sich bekannt, unter Schutzgas zu löten, um die Qualität der Lötverbindungen und die Ausfallrate zu verbessern, Krätzebildung zu verringern und damit Lötzinn einzusparen und mit geringerem oder schwächerem Flussmitteleinsatz und damit geringerer Produkt- und Umweltschädigung sowie verringertem Reinigungsaufwand arbeiten zu können.

Als Schutzgas kommen nichtkorrosive Gase in Betracht, insbesondere Stickstoff. Bei heute üblichen Schutzgaslötmaschinen werden Stickstoffreinheiten im Bereich einiger 100 ppm bis zu unter 20 ppm Restsauerstoffgehalt eingesetzt, wobei typischerweise einige Kubikmeter bis einige zehn Kubikmeter pro Stunde Stickstoff über mehrere Einströmstellen verbraucht werden. Je nach Einzelfall wird die Stickstoffversorgung dabei über Flaschenbündel oder über Tankversorgungen gewährleistet.

Der vorliegenden Erfindung liegt das technische Problem zu Grunde, eine neue Lötmaschine und ein neues Lötverfahren anzugeben, die im Hinblick auf den Schutzgaseinsatz verbessert sind.

Die Erfindung betrifft zum einen eine Lötmaschine zum Löten unter Schutzgas mit einer Vorheizstrecke, einer unter Schutzgas gehaltenen Lötstrecke und einer Kühlstrecke, die miteinander als Lötmaschinenkanal verbunden und so ausgestaltet sind, dass zu lötende Produkte durch eine Eintrittsöffnung in die Vorheizstrecke eingebracht und durch diese, die Lötstrecke, die Kühlstrecke und eine Austrittsöffnung hindurch transportiert werden können, dadurch gekennzeichnet, dass die Eintrittsöffnung und die Austrittsöffnung jeweils in solcher Weise tiefer angeordnet sind als zumindest ein Zwischenbereich des Lötmaschinenkanals zwischen der Eintrittsöffnung und der Kühlstrecke bzw. ein Zwischenbereich zwischen der Austrittsöffnung und der Vorheizstrecke, dass das jeweils höchste Niveau der Eintrittsöffnung bzw. der Austrittsöffnung tiefer liegt als das jeweils tiefste Niveau des jeweiligen Zwischenbereichs, sowie ein Verfahren zum Löten unter Verwendung einer solchen Lötmaschine.

Bevorzugte Ausgestaltungen der Erfindung sind in den abhängigen Ansprüchen angegeben und werden im Folgenden näher erläutert. Dabei beziehen sich die einzelnen Merkmale grundsätzlich sowohl auf die Vorrichtungskategorie als auch auf die Verfahrenskategorie der Erfindung, ohne dass hierzwischen im Einzelnen explizit unterschieden wird.

Die Grundidee der Erfindung besteht darin, Schutzgas zu sparen, indem die durch die erhöhte Temperatur innerhalb des Lötmaschinenkanals entstehenden Dichteunterschiede ausgenutzt werden. Gewissermaßen nach dem Prinzip einer Taucherglocke sollen daher die Eintrittsöffnung und die Austrittsöffnung in die Vorheizstrecke bzw. aus der Kühlstrecke des Lötmaschinenkanals relativ tief angeordnet werden. Dies bedeutet konkret, dass die jeweils höchsten Niveaus dieser Öffnungen, also gewissermaßen der obere Rand, tiefer liegen als ein jeweils niedrigstes Niveau, also sozusagen der untere Rand einer Querschnittsöffnung, eines Zwischenbereichs innerhalb des Lötmaschinenkanals.

Insbesondere soll mindestens der Kernbereich hinsichtlich der Funktion des Schutzgases, nämlich die Lötstrecke, vor der Atmosphäre geschützt werden, so dass die Lötstrecke oder ein Bereich zwischen der Lötstrecke und der jeweiligen Öffnung höher liegen soll als die Eintrittsöffnung und die Austrittsöffnung. Anders ausgedrückt bedeutet das, dass die Eintrittsöffnung und die Austrittsöffnung jeweils tiefer liegen sollen als ein Zwischenbereich zwischen der Eintrittsöffnung und der Kühlstrecke, also bis einschl. zur Lötstrecke, und analog die Austrittsöffnung tiefer liegen soll als ein Zwischenbereich zwischen dieser und der Vorheizstrecke, also bis einschließlich zur Lötstrecke.

Dabei betragen vorzugsweise die jeweiligen Höhendifferenzen mindestens 50 cm. Sie liegen jedoch wiederum vorzugsweise nicht über 300 cm. Die quantitativen Grenzen erklären sich dadurch, dass einerseits die gewünschte Wirkung ab den Untergrenzen in einer ausgeprägteren Form eintritt, andererseits aber ab Höhendifferenzen von 300 cm ein übergroßer maschinenbautechnischer Aufwand und eine erhebliche Baugröße entgegenstehen.

Damit können die Höhendifferenzen in Folge der im Inneren des Lötmaschinenkanals höheren Temperaturen, insbesondere der im Bereich der Lötstrecke erhöhten Temperaturen, schleusenähnlich wirken, weil das erhitzte Schutzgas im Lötmaschinenkanal gehalten wird. Daraus kann bei einer Ausgestaltung der Erfindung insoweit Nutzen gezogen werden, als die Eintrittsöffnung und die Austrittöffnung entgegen dem Stand der Technik tatsächlich offen, d. h. schleusenfrei, gestaltet sind. Es können also türähnliche oder vorhangähnliche Konstruktionen zur Verringerung des Schutzgasverlustes bzw. des Eintritts von atmosphärischen Gasen in den Lötmaschinenkanal entfallen und die damit verbundenen Nachteile beseitigt werden. Insbesondere kann ein kontinuierlicher Transport ohne die durch einen Schleusenbetrieb erforderliche chargenweise Verarbeitung gewährleistet werden. Im Übrigen vereinfacht sich der Aufbau der Lötmaschine.

Das Schutzgas ist vorzugsweise Stickstoff, wobei nicht notwendigerweise ausschließlich Stickstoff eingebracht wird. Insbesondere könnten im Bereich der Vorheizstrecke und/oder der Kühlstrecke oder an deren jeweiligen eintritts- bzw. austrittsöffnungsseitigen Enden entweder schlechtere Stickstoffqualitäten oder auch Luft eingebracht werden, weil dort wegen der reduzierten Temperaturen und der Entfernung vom eigentlichen Lötvorgang geringere oder keine Schädigungen durch Sauerstoffpartialdrücke zu erwarten sind. Bevorzugt ist aber, dass der gesamte Lötkanal unter Schutzgas gehalten ist.

Weiterhin kann gemäß einer Ausgestaltung der Erfindung ein gerichteter Schutzgaseintrag vorgesehen sein. Insbesondere können zumindest teilweise gerichtete Lanzen verwendet werden, um bestimmte Strömungseffekte in dem Lötmaschinenkanal zu erzielen. Insbesondere können die Lanzen so ausgerichtet werden, dass sie der Transportrichtung der Produkte entgegengesetzt sind und damit einer durch den Produkttransport bewirkten Atmosphärenbewegung und/oder dem Eintrag von Kontaminationen durch die Produkte entgegenwirken.

Ergänzend oder alternativ dazu kann auch eine Höhendifferenz zwischen der Eintrittsöffnung und der Austrittsöffnung dazu ausgenutzt werden, insgesamt eine Nettoschutzgasströmung oder auch nur eine Kompensation entgegengesetzt zu dem Produkttransport zu erzielen. Diese Höhendifferenz beträgt vorzugsweise mindestens 15 cm, besonders bevorzugter Weise mindestens 20 cm. Die Obergrenze von 300 cm erhöht sich entsprechend.

Die Erfindung richtet sich vorwiegend auf Wellenlötmaschinen, Reflowlötmaschinen und, als besondere Ausgestaltung von Wellenlötmaschinen, auf Selektivlötmaschinen.

Im Folgenden wird die Erfindung anhand von Ausführungsbeispielen näher beschrieben, wobei die einzelnen Merkmale auch in anderen Kombinationen erfindungswesentlich sein können und für die Lötmaschine und für das Lötverfahren relevant sind.
- Figur 1: zeigt eine schematische Längsschnittansicht durch eine erfindungsgemäße Lötmaschine als erstes Ausführungsbeispiel.
- Figur 2: zeigt in entsprechender Weise ein zweites Ausführungsbeispiel.
- Figur 3: zeigt in entsprechender Weise ein drittes Ausführungsbeispiel.

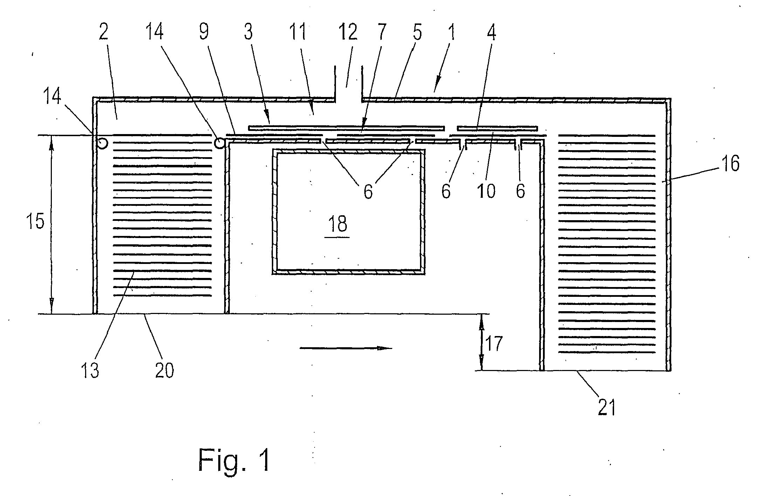

Die in Figur 1 summarisch mit 1 bezeichnete Wellenlötmaschine weist einen Lötmaschinenkanal 5 mit einem im Längsschnitt der Figur 1 U-förmigen Verlauf auf. Bei diesem Längsschnitt verläuft der Produkttransport in noch im Einzelnen dargestellter Weise in der Papierebene, und zwar im Wesentlichen horizontal. Die Schwerkraft verläuft in der Papierebene vertikal.

Der Lötmaschinenkanal 5 weist eine Vorheizstrecke 2 u. a. zur Aktivierung von Flussmitteln und zur langsamen Erwärmung (um die Große der Temperatur/Zeitableitung zu begrenzen und damit thermisch induzierten Stress vorzubeugen), eine Lötstrecke 3 und eine Kühlstrecke 4 auf. Dabei ist eine Stickstoffeinspeisung an den mit 6 bezeichneten Stellen vorgesehen, also in einem oberen lötprozessnahen Bereich 7, hier unmittelbar über einem Lötbad 18, und unterhalb einer Transportebene 9 in diesem Bereich und außerdem auch im Kühlstreckenbereich 10 unterhalb einer eingezeichneten und den Lötstreckenbereich 11 verlassenden Leiterplatte.

Der Vorheizstrecke 2 ist ein Eingangsbereich 13 mit einer nach unten weisenden Eintrittsöffnung 20 vorgeschaltet, und der Kühlstrecke 4 ist ein Ausgangsbereich 16 mit einer ebenfalls nach unten weisenden Austrittsöffnung 21 nachgeschaltet. Dabei liegt die Eintrittsöffnung 20 60 cm tiefer als der Bodenbereich der Lötstrecke 3 und der Kühlstrecke 4. Die Austrittsöffnung 21 liegt weitere 20 cm tiefer. Die Höhendifferenz von 60 cm ist mit der Bezugsziffer 15 bezeichnet, die zusätzliche Höhendifferenz von 20 cm mit 17.

Der Eingangsbereich 13 und der Ausgangsbereich 16 sind hier als Leiterplattenaufzüge zum vertikalen Transport der dabei horizontal liegenden Leiterplatten ausgestaltet, wie durch die waagrecht laufenden Striche angedeutet. Der Lötmaschinenkanal verläuft also in diesen Bereichen vertikal.

Mit 12 ist symbolisch eine über der Lötstrecke 3 angeordnete Ablufteinrichtung bezeichnet, die so gesteuert wird, dass ein relatives Gleichgewicht zwischen der in der Lötstrecke erzeugten Abgasmenge und der eingespeisten Inertgasmenge besteht und gleichzeitig die in der Vorheizstrecke 2 erzeugte Abgasmenge aus Flussmittel, Lösungsmitteln, Kunststoffbestandteilen u. a. aus der Eintrittsöffnung 20 herausgedrückt wird.

Die erwünschte Strömungsrichtung im Bereich der Vorheizstrecke 2 wird zusätzlich über gerichtete Lanzen 14 erzwungen, die zusätzlichen Stickstoff einspeisen und hier nach unten gerichtet sind. Hinzu kommt die bereits erwähnte Höhendifferenz 17 von 20 cm zwischen Eintrittsöffnung 20 und Austrittsöffnung 21.

Beim Wellenlöten wird in der annähernd geraden Lötstrecke 5 über eine Öffnung von unten gasdicht das Lötbad 18 montiert. Die entsprechende Lötwanne kann im Übrigen auch zusätzlich mit einem Stickstoffhut ausgerüstet sein.

Würde die in Figur 1 dargestellte Lötmaschine zum Reflowlöten eingesetzt, wäre statt des Lötbades 18 im Bereich der geraden Lötstrecke 3 eine Heizung für die sog. Peakzone oder Lötzone vorgesehen.

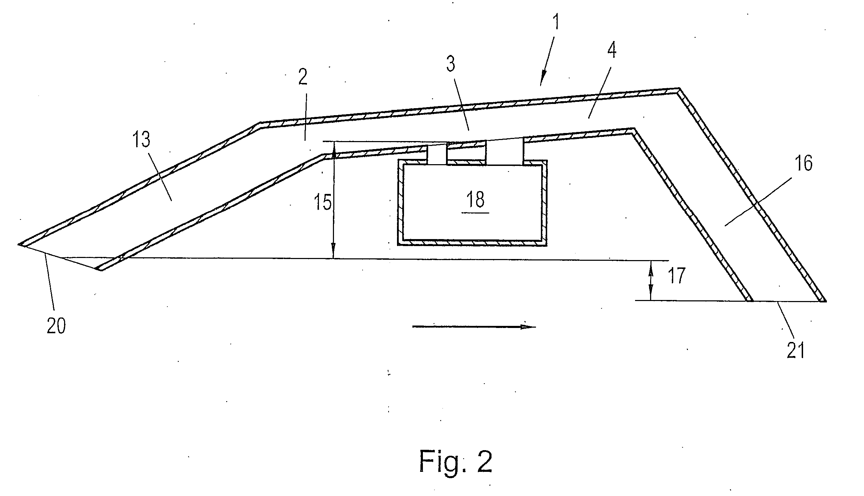

Die in Figur 1 dargestellte U-Form des Lötmaschinenkanals 2 ist im Hinblick auf den Platzbedarf besonders günstig. Wenn aber beispielsweise zugunsten eines störungsfreien Transportes kein Aufzugbetrieb gewünscht ist, lässt sich die Lötmaschine auch wie in Figur 2 skizziert gestalten. Dort ist nur die qualitative Form eingezeichnet, wobei einige der Bezugszeichen aus Figur 1 die jeweils entsprechenden Teile bezeichnen. Hier kann insbesondere der Eingangsbereich 13 relativ flach ansteigen, und zwar mit einer solchen Steigung, dass die Leiterplatten entsprechend geneigt transportiert werden können, ohne dass die noch nicht durch fertige Lötstellen fixierten Bauelemente in ihrer Position verändert werden.

Dementsprechend kann der Ausgangsbereich 16 steiler verlaufen, weil hier die Lötung bereits abgeschlossen ist. Beispielsweise können Bandtransportmechanismen Verwendung finden. Im Übrigen gelten die Erläuterung zu Figur 1.

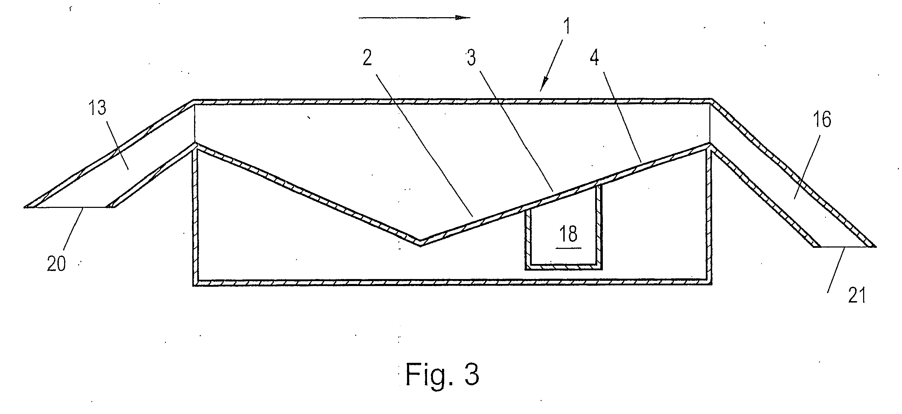

Figur 3 zeigt eine weitere Variante, bei der der Eingangsbereich 13 und der Ausgangsbereich 16 jeweils an eine im Übrigen, d. h. in der in Figur 3 gezeichneten rechteckigen Form, angebaute zusätzliche Einlass- und Auslasskonstruktionen sind. In Figur 3 ist mit der in dem rechteckigen inneren Bereich eingezeichneten Konstruktion eine an sich bekannte Reflowlötmaschine gemeint.

In Figur 3 erkennt man zum einen, dass die Eintrittsöffnung und die Austrittsöffnung nicht notwendigerweise auf unterschiedlicher Höhe liegen müssen, sondern hier gleich hoch liegen.

Zum anderen zeigt Figur 3, dass es im Übergang vom Eingangsbereich 13 in den Bereich der Vorheizstrecke 2 zu einem gegenüber der Eintrittsöffnung 20 deutlich erhöhten Bodenniveau des Lötmaschinenkanals kommt und dass Analoges für den Übergang von der Lötstrecke 3 bzw. der Kühlstrecke 4 zu der Austrittsöffnung 21 gilt. Allerdings gibt es hier innerhalb des zentralen Lötmaschinenkanals, und zwar im Bereich der der Lötstrecke 3 unmittelbar vorgelagerten Bereiche der Vorheizstrecke 2, durchaus Bodenbereiche, die tiefer liegen als Eintrittsöffnung und Austrittsöffnung.
Bei allen drei Ausführungsbeispielen sind die Eintrittsöffnungen 20 und Austrittsöffnungen 21 offen im Sinn von schleusenfrei. Bei einer relativ zu der Eintrittsöffnung und Austrittsöffnung eher liegenden Orientierung der ein- und austransportierten Leiterplatten können diese Öffnungen auf passende Schlitze verengt werden, um atmosphärische Einflüsse zu minimieren.

### Bezugszeichenliste:

- 1: Lötmaschine
- 2: Vorheizstrecke
- 3: Lötstrecke
- 4: Kühlstrecke
- 5: Lötmaschinenkanal
- 6: Stellen für Stickstoffeinspeisung
- 7: Lötprozessnaher Bereich
- 9: Transportebene
- 10: Kühlstreckenbereich
- 11: Lötstreckenbereich
- 12: Ablufteinrichtung
- 13: Eingangsbereich
- 14: Lanzen
- 15: Höhendifferenz von 60 cm
- 16: Ausgangsbereich
- 17: Höhendifferenz von 20 cm
- 18: Lötbad
- 20: Eintrittsöffnung
- 21: Austrittöffnung

## Patentansprüche

1. Lötmaschine (1) zum Löten unter Schutzgas mit
einer Vorheizstrecke (2),
einer unter Schutzgas gehaltenen Lötstrecke (3) und
einer Kühlstrecke (4),
die miteinander als Lötmaschinenkanal (5) verbunden und
so ausgestaltet sind, dass zu lötende Produkte durch eine Eintrittsöffnung (20) in die Vorheizstrecke (2) eingebracht und durch diese, die Lötstrecke (3), die Kühlstrecke (4) und eine Austrittsöffnung (21) hindurch transportiert werden können, **dadurch gekennzeichnet, dass** die Eintrittsöffnung (20) und die Austrittsöffnung (21) jeweils in solcher Weise tiefer angeordnet sind als zumindest ein Zwischenbereich des Lötmaschinenkanals (5) zwischen der Eintrittsöffnung (20) und der Kühlstrecke (4) bzw. ein Zwischenbereich zwischen der Austrittsöffnung (21) und der Vorheizstrecke (2),
dass das jeweils höchste Niveau der Eintrittsöffnung (20) bzw. der Austrittsöffnung (21) tiefer (15, 17) liegt als das jeweils tiefste Niveau des jeweiligen Zwischenbereichs.

2. Lötmaschine nach Anspruch 1, bei der die Höhendifferenz (15) zwischen dem höchsten Niveau der Eintrittsöffnung (20) und dem tiefsten Niveau des Zwischenbereichs zwischen der Eintrittsöffnung (20) und der Kühlstrecke (4) mindestens 50 cm beträgt.

3. Lötmaschine nach Anspruch 1 oder 2, bei der die Höhendifferenz (15) zwischen dem höchsten Niveau der Eintrittsöffnung (20) und dem tiefsten Niveau des Zwischenbereichs zwischen der Eintrittsöffnung (20) und der Kühlstrecke (4) höchstens 300 cm beträgt.

4. Lötmaschine nach einem der vorstehenden Ansprüche, bei der die Höhendifferenz (15, 17) zwischen dem höchsten Niveau der Austrittsöffnung (21) und dem tiefsten Niveau des Zwischenbereichs zwischen der Austrittsöffnung (21) und der Vorheizstrecke (2) mindestens 50 cm beträgt.

5. Lötmaschine nach einem der vorstehenden Ansprüche, bei der die Höhendifferenz (15, 17) zwischen dem höchsten Niveau der Austrittsöffnung (21) und dem tiefsten Niveau des Zwischenbereichs zwischen der Austrittsöffnung (21) und der Vorheizstrecke (2) höchstens 320 cm beträgt.

6. Lötmaschine nach einem der vorstehenden Ansprüche, bei der die Eintrittsöffnung (20) und die Austrittsöffnung (21) offen im Sinn von schleusenfrei sind.

7. Lötmaschine nach einem der vorstehenden Ansprüche, bei der das Schutzgas Stickstoff ist.

8. Lötmaschine nach einem der vorstehenden Ansprüche, bei der ein Schutzgaseintrag zumindest teilweise über gerichtete Lanzen (14) erfolgt und dem Produkttransport entgegengesetzt ist.

9. Lötmaschine nach einem der vorstehenden Ansprüche, bei der das höchste Niveau der Eintrittsöffnung (20) höher (17) liegt als das höchste Niveau der Austrittsöffnung (21).

10. Lötmaschine nach einem der vorstehenden Ansprüche, die zum Wellenlöten, Reflowlöten oder Selektivlöten ausgelegt ist.

11. Verfahren zum Löten unter Schutzgas, bei dem zu lötende Produkte durch eine Eintrittsöffnung (20) in einen aus einer Vorheizstrecke (2), einer Lötstrecke (3) und einer Kühlstrecke (4), die miteinander verbunden sind, gebildeten Lötmaschinenkanal (5) und durch eine Austrittsöffnung (21) transportiert werden, wobei die Lötstrecke (3) unter Schutzgas gehalten wird, **dadurch gekennzeichnet, dass** die Eintrittsöffnung (20) und die Austrittsöffnung (21) jeweils in solcher Weise tiefer angeordnet sind als zumindest ein Zwischenbereich des Lötmaschinenkanals (5) zwischen der Eintrittsöffnung (20) und der Kühlstrecke (4) bzw. ein Zwischenbereich zwischen der Austrittsöffnung (21) und der Vorheizstrecke (2), dass das jeweils höchste Niveau der Eintrittsöffnung (20) bzw. der Austrittsöffnung (21) tiefer liegt als das jeweils tiefste Niveau des jeweiligen Zwischenbereichs.

12. Verfahren zum Löten unter Verwendung einer Lötmaschine (1) nach einem der Ansprüche 2 - 10.
